# EUROPÄISCHE PATENTSCHRIFT

(11) **EP 3 290 320 B1**
(45) Veröffentlichungstag und Bekanntmachung des Hinweises auf die Patenterteilung: **16.09.2020**
(21) Anmeldenummer: 17188740.9
(22) Anmeldetag: 31.08.2017
(51) Int. Cl.: B62K 27/00, B62K 27/12

(54) **ANHÄNGERKUPPLUNG**
TRAILER COUPLING
ATTELAGE DE REMORQUE

(30) Priorität: 31.08.2016 DE 102016116261
(43) Veröffentlichungstag der Anmeldung: 07.03.2018
(73) Patentinhaber: Croozer GmbH, 50825 Köln (DE)
(72) Erfinder: Gray, Roger, London, SE3 7NT (GB)
(74) Vertreter: Lenzing Gerber Stute

(56) Entgegenhaltungen:
- US-A- 2 334 957
- US-A1- 2012 313 345
- US-A1- 2016 200 388

## Beschreibung

Die vorliegende Erfindung betrifft eine Kupplung zum Verbinden eines mindestens eine Deichsel aufweisenden zweispurigen Anhängers mit einem nicht motorisierten Fahrzeug oder einem lediglich einen Hilfsantrieb aufweisenden Fahrzeug, insbesondere einem Fahrrad, mit zwei zusammenwirkenden, voneinander lösbaren Kupplungsteilen, von denen das eine am Fahrzeug und das andere an der Deichsel zu befestigen ist, wobei die zusammenwirkenden Kupplungsteile einen Bolzen mit mindestens einer Außenfläche und eine Bolzenaufnahme mit mindestens einer Innenfläche aufweisen, wobei die mindestens eine Außenfläche und die mindestens eine Innenfläche derart zusammenwirken können, dass Bolzen und Bolzenaufnahme um ihre eigene Achse relativ zueinander im Wesentlichen nicht drehbar sind. Sie betrifft auch einen Fahrzeuganhänger mit einer Deichsel, die eine solche Kupplung aufweist.

Kupplungen zum Verbinden der Deichsel eines Fahrradanhängers mit einem Fahrrad sind hinlänglich bekannt. Üblicherweise werden sie entweder zentral unterhalb des Sattels am Fahrradrahmen oder an der Sattelstütze oder seitlich an der Hinterradgabel aus Kettenstrebe und Sitzstrebe bzw. direkt am Hinterrad des Fahrrades befestigt.

Eine derartige, vergleichsweise einfach aufgebaute Kupplung, die bereits vor einigen Jahren von der Anmelderin angeboten wurde, weist ein Achsstück mit einem Vierkant sowie ein sich quer dazu erstreckendes Ansatzstück mit einer Bohrung auf. Das Ansatzstück wird auf das Ende einer Fahrradachse aufgesetzt und mit einer Mutter am Ausfallende des Fahrrads festgeschraubt. Die Längsachse des Vierkants verläuft dann parallel versetzt zur Radachse. Außerdem weist die Kupplung eine auf den Vierkant aufsetzbare Hülse mit einem Innenvierkant-Hohlprofil auf. An der Hülse ist eine Spiralfeder befestigt, mit der die Hülse mit der Deichsel verbunden ist. Die auf den Vierkant aufgeschobene Hülse wird durch einen Sicherungssplint gesichert, der durch fluchtende Bohrungen im Vierkant und der Hülse hindurchgesteckt wird. Es hat sich als Nachteil in der Handhabung herausgestellt, dass die Lage des Achsstücks nicht immer optimal eingestellt werden kann. So kann die Lage des Achsstücks durch Ausrichten des Ansatzstücks nicht immer frei eingestellt werden, weil beispielsweise die Ausfallenden von Fahrrädern Geometrien haben, die einem freien Positionieren des Ansatzstücks entgegenstehen. Auch kann sich das Ansatzstück beim Festschrauben der Mutter relativ leicht verschieben.

Demgegenüber besteht eine Aufgabe der Erfindung darin, die Kupplung in der Handhabung einfacher zu gestalten und insbesondere eine Verkleinerung des für die Einstellung der Lage der Kupplung in Bezug zu Fahrzeug bzw. Deichsel benötigten Raumes zu ermöglichen.

Diese Aufgabe wird bei einer Kupplung der eingangs genannten Art gemäß Anspruch 1 dadurch gelöst, dass die Anzahl n_{B} der Außenflächen des Bolzens (1) ungleich der Anzahl n_{H} der Innenflächen der Bolzenaufnahme ist und die mindestens zwei Außen-bzw. Innenflächen derart angeordnet sind, dass der Bolzen (1) und die Bolzenaufnahme relativ zueinander mindestens in zwei Positionen drehfest zueinander positioniert werden können, die in Umfangsrichtung des Bolzens (1) in einem Winkel von höchstens 60° zueinander stehen.

Diese Aufgabe wird auch mit einem Fahrzeuganhänger mit einer Deichsel mit einer solchen Kupplung gemäß Anspruch 11 gelöst.

Unter einer Bolzenaufnahme wird hier und im Folgenden ein Kupplungsteil verstanden, das den Bolzen zumindest abschnittsweise so umgreift, dass der in der Bolzenaufnahme sitzende Bolzen drehsicher gelagert ist. Dabei kommt es nicht darauf an, dass die Bolzenaufnahme den Bolzen in Umfangsrichtung oder in Längsrichtung des Bolzens vollständig umgreift.

Die vorbekannte Bolzenaufnahme mit Innenvierkant kann auf dem vorbekannten Vierkantachsstück lediglich in vier Positionen positioniert werden, von denen allerdings nur eine Position tatsächlich verwendbar ist, die durch die Lage der Deichsel, die im Wesentlichen horizontal ausgerichtet sein sollte, vorgegeben ist. Eine Anpassung der Lage der Bolzenaufnahme zur Lage der Deichsel kann somit allenfalls durch Einstellen der Lage des Ansatzstücks erfolgen.

Werden Bolzenaufnahme und Bolzen so ausgestaltet, dass die Positionen in einem geringeren Winkel zueinander stehen, ist eine Anpassung der Position der Bolzenaufnahme zur Lage der Deichsel durch ein Aufsetzen der Bolzenaufnahme auf den Bolzen in einer anderen Position möglich. Mit der Erfindung ist es beispielsweise möglich, die Lage des Anschlusses der Deichsel an das deichselseitige Kupplungsteil in eine Lage im Bereich von +/- 30° zur Horizontalen zu bringen. Je kleiner der Winkel der unterschiedlichen Positionen, in denen die Bolzenaufnahme auf den Bolzen aufgesetzt werden kann, zueinander ist, desto genauer kann die Lage des deichselseitigen Kupplungsteils zur Deichsel bzw. zum Anhänger eingestellt werden.

Je genauer die Position von Bolzenaufnahme und Bolzen zueinander in Bezug auf eine optimale Lage der Deichsel eingestellt werden kann, desto weniger muss beispielsweise die Position eines etwaigen am Bolzen angeordneten, sich quer dazu erstreckenden Ansatzstücks korrigiert werden. Der für das Einstellen der Lage der Kupplung zum Fahrzeug bzw. zur Deichsel benötigte Raum kann dadurch wesentlich reduziert werden.

Erfindungsgemäß ist dabei die Anzahl n_{B} der Außenflächen des Bolzens ungleich der Anzahl n_{H} der Innenflächen der Bolzenaufnahme. So ist es möglich, zumindest für einen der beiden Kupplungsteile eine standardisierte Querschnittsform, beispielsweise einen Vierkantquerschnitt oder einen Sechskantquerschnitt, zu verwenden. So kann ein Bolzen mit drei- oder viereckigem bzw. drei- oder vierflächigem Außenquerschnitt ohne weiteres in verschiedenen Positionen in eine Bolzenaufnahme mit beispielsweise 6- oder 12-eckigem bzw. -flächigem inneren Querschnitt eingesetzt werden, wenn die Querschnittsmaße entsprechend aufeinander angepasst sind.

Dies funktioniert insbesondere dann, aber nicht nur dann, wenn die Anzahl der Seiten eines Kupplungsteils n_{B} oder n_{H} ein ganzzahliges Vielfaches der Anzahl der Seiten des anderen Kupplungsteils n_{H oder} n_{B} ist. So kann beispielweise eine Bolzenaufnahme mit einem Innenquerschnitt in Form eines Vierkants in 8 bzw. 12 verschiedenen Positionen auf einen Bolzen mit einem 8-eckigen oder 12-eckigen Querschnitt aufgesetzt werden, wenn die Querschnittsmaße entsprechend aufeinander abgestimmt sind. In einer ganz bevorzugten Ausführungsform hat der Bolzen zumindest abschnittsweise einen Sechskantquerschnitt in Form eines regelmäßigen Sechsecks. Ein wesentlicher Vorteil der Verwendung eines Sechskantquerschnitts liegt darin, dass der Bolzen mit einem Standardwerkzeug wie beispielsweise einem Maulschlüssel an dem Fahrzeug bzw. der Deichsel verschraubt werden kann, wenn der Bolzen mit einem Innen- oder Außengewinde versehen ist und eine entsprechende Befestigungsmöglichkeit am Fahrzeug bzw. der Deichsel vorgesehen ist.

Ist der innere Querschnitt der Bolzenaufnahme ein regelmäßiger Zwölfstern und hat der Außenquerschnitt des Bolzens eine geringere Anzahl an Außenflächen und beispielsweise die Form eines regelmäßigen Dreiecks, Vierecks oder Sechsecks, kann die Bolzenaufnahme in zwölf verschiedenen Positionen auf den Bolzen aufgesetzt werden. In diesem Fall kann die Lage der Deichsel zur Horizontalen durch Auswahl einer geeigneten Position der Bolzenaufnahme auf dem Bolzen in einem Winkel von +/- 15° eingestellt werden.

Dementsprechend bevorzugt kann die Bolzenaufnahme relativ zum Bolzen in mehr als sechs Positionen und insbesondere in 12 Positionen, in denen die Innenfläche(n) der Bolzenaufnahme und die Außenfläche(n) des Bolzens zusammenwirken, auf dem Bolzen positioniert werden.

Grundsätzlich reicht es aus, wenn eines der Kupplungsteile nur eine Innen- bzw. Außenfläche hat, um eine relative Drehung der Kupplungsteile zueinander zu blockieren. In diesem Fall wird der Bolzen von den zusammenwirkenden Innen- und Außenflächen nur einseitig abgestützt, er kann so nicht in seiner Position gehalten werden. Vielmehr müssen weitere Stützmittel vorgesehen sein, um den Bolzen in der Bolzenaufnahme zu halten. Hierfür kann die Bolzenaufnahme beispielsweise einen hohlzylindrischen Abschnitt aufweisen, in den ein entsprechender zylindrischer Abschnitt des Bolzens eingesetzt wird, so dass der Bolzen in der Bolzenaufnahme radial abgestützt ist.

In einer besonders bevorzugten Ausführungsform weist der Bolzen an einem seiner Stirnenden ein Gewinde, insbesondere ein Innengewinde, auf. So kann der Bolzen einfach auf ein Gewindestück, beispielsweise an einem Fahrzeug, aufgeschraubt werden. Wird die Kupplung zur Befestigung eines Fahrrads an einem Fahrradanhänger verwendet, kommt als Gewindestück insbesondere das Achsende einer Hinterradachse in Betracht. Hieraus ergeben sich zwei ganz wesentliche Vorteile. Zum einen kann der Bolzen als Radmutter verwendet werden, so dass ihm eine Doppelfunktion zukommt. Gleichzeitig wird der Raum, der für das Einstellen der Lage der Kupplung zum Fahrzeug bzw. zur Deichsel benötigt wird, auf ein Minimum begrenzt, da auf das im eingangs erwähnten Stand der Technik verwendete Ansatzstück verzichtet werden kann.

Zum Sichern der Kupplungsteile können verschiedenste Verriegelungsmittel vorgesehen sein. Wie bereits im eingangs erwähnten vorbekannten Stand der Technik kann ein Sicherungssplint verwendet werden. Voraussetzung hierfür ist, dass für jede Position der Bolzenaufnahme auf dem Bolzen jeweils fluchtende Bohrungen in Bolzenaufnahme und Bolzen vorgesehen sind, so dass der Sicherungsstift in jeder Position der Bolzenaufnahme auf dem Bolzen in beide Kupplungsteile eingesetzt werden kann. Ebenso sind aber beispielsweise auch Rastmechanismen verwendbar. So kann beispielsweise an einem der beiden Kupplungsteile ein Riegelelement vorgesehen sein, das, wenn die Kupplungsteile zusammengesetzt sind, in eine Nut am anderen Kupplungsteil eingreift und nur durch einen manuellen Eingriff aus dieser Position wieder gelöst werden kann.

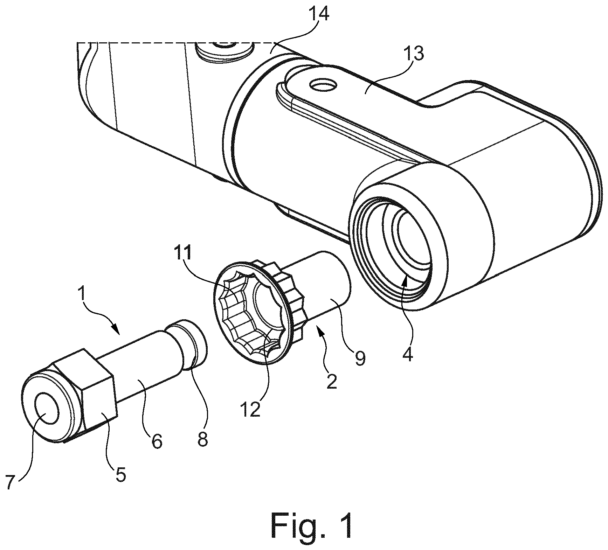

In einer bevorzugten Ausgestaltung der Erfindung ist der Bolzen ein zylindrisches Bauteil mit einem Sechskantkopf und die Bolzenaufnahme eine zylindrische Hülse mit einem an einer ihrer Stirnseiten ausgebildeten Kragen, wobei der Kragen einen mehreckigen inneren Querschnitt aufweist und wobei die Hülse verdrehsicher in einem Kupplungsgehäuse sitzt. Der die Innenflächen aufweisende Teil der Bolzenaufnahme kann aber ebenso gut Bestandteil eines Kupplungsgehäuses sein, der beispielsweise getrennt von einer im Kupplungsgehäuse ausgebildeten hohlzylindrischen Aufnahme für den zylindrischen Teil des Bolzens ausgebildet ist. Neben dem bereits zuvor beschriebenen Vorteil der radialen Abstützung des Bolzens in der Hülse besteht in beiden Fällen ein weiterer Vorteil darin, dass der Bolzen im hohlzylindrischen Abschnitt der Bolzenaufnahme geführt ist, während er in eine geeignete Winkelstellung gebracht wird.
Die Kupplung weist deichselseitig vorzugsweise mindestens ein weiteres Gelenk auf, durch das die Kupplung mindestens zwei Freiheitsgerade erhält, wobei das weitere Gelenk vorzugsweise ein Elastomergelenk ist. Alternativ ist beispielsweise auch eine Kopplung des deichselseitigen Kupplungsteils mit der Deichsel über eine Feder, insbesondere eine Spiralfeder, möglich. Auch die Verwendung eines oder mehrerer Gelenke, auch kardanischer Gelenke, zur Verbindung des deichselseitigen Kupplungsteils mit der Deichsel ist denkbar.
Im Folgenden wird die Erfindung anhand einer Figur 1, in der ein bevorzugtes Ausführungsbeispiel der Erfindung vereinfacht in Form einer Prinzipskizze dargestellt ist, näher erläutert.
Die erfindungsgemäße Kupplung weist einen Bolzen 1, eine Hülse 2 sowie ein Kupplungsgehäuse mit einer Aufnahmeöffnung 4 für die Hülse 2 auf.
Der Bolzen 1 hat einen Sechskantkopf 5 und einen sich daran anschließenden zylindrischen Abschnitt 6. An der Stirnseite des Sechskantkopfs 5 ist ein Innengewinde 7 vorgesehen, mit dem der Bolzen 1 beispielsweise auf eine Hinterradachse eines Fahrrads aufgeschraubt werden kann. Im Bereich des dem Sechskantkopf 5 abgewandten Endes des Bolzens 1 ist im zylindrischen Abschnitt 6 eine umlaufende Nut 8 eingelassen.

Die in Fig.1 getrennt vom Kupplungsgehäuse dargestellte Hülse 2 wird drehfest in die Aufnahmeöffnung 4 des Kupplungsgehäuses eingesetzt. Sie weist einen hohlzylindrischen Abschnitt 9 sowie einen Kragenabschnitt 11 auf. Die lichte Weite des Kragenabschnitts 11 ist größer als der Innendurchmesser des hohlzylindrischen Abschnitts 9. Die Innenkontur des Kragenabschnitts 11 ist in Form eines Zwölfsterns mit 12 äußeren Kanten, die Außenecken bilden, und zwölf dazwischenliegenden inneren Kanten, die über Innenflächen miteinander verbunden sind, wobei die Innenflächen zu beiden Seiten einer äußeren Kante in einem Winkel zueinander stehen, der dem Winkel benachbarter Außenflächen des Sechskant-Bolzenkopfs entsprechen, also in diesem Beispiel in einem Winkel von 120° zueinander stehen. Der Kragenabschnitt 11 steht mit dem hohlzylindrischen Abschnitt 9 über eine ringscheibenförmige Fläche 12 in Verbindung, die als Anschlagfläche dient.

Das Kupplungsgehäuse weist einen quer zur Längsachse der Aufnahmeöffnung 4 verlaufenden Abschnitt 13 auf, der mit einem weiteren Kupplungsabschnitt 14 derart verbunden ist, dass die Abschnitte 13 und 14 relativ zueinander um ihre Längsachsen drehbar sind. Auf der dem Abschnitt 13 abgewandten Seite des Kupplungsabschnitts 14 können beispielsweise ein längliches Elastomerstück, eine Spiralfeder oder eine andere gelenkige Verbindung (nicht dargestellt) vorgesehen sein, über die dann der Kupplungsabschnitt 14 mit der Deichsel (nicht dargestellt) verbunden ist, damit die Kupplung die für die Verbindung von Fahrzeug und Anhänger im Betrieb notwendigen Freiheitsgrade erhält.

Zum Verbinden von Fahrzeug und Deichsel wird das Kupplungsgehäuse mit der Hülse 2 auf den am Fahrzeug befestigten Bolzen 1 soweit aufgesteckt, bis der Sechskantkopf 5 an der ringscheibenförmigen Fläche 12 anliegt. Dabei kann das Kupplungsgehäuse in Umfangsrichtung des Bolzens 1 in zwölf verschiedenen Positionen, die zueinander jeweils in einem Winkel von 30° stehen, positioniert werden, so dass eine gute Ausrichtung des Kupplungsgehäuses relativ zur Deichsel möglich ist. Ist das Kupplungsgehäuse bis zum Anschlag der Hülse 2 auf den Bolzen 1 aufgesteckt, greift ein im Kupplungsgehäuse vorgesehener Rastmechanismus in die Nut 8 des Bolzens ein und hält ihn so in seiner Position. Durch Betätigen eines nicht dargestellten Druckknopfs an der dem Bolzen 1 gegenüberliegenden Seite des Kupplungsgehäuses kann der Rastmechanismus wieder freigegeben und das Kupplungsgehäuse vom Bolzen 1 heruntergezogen werden. Alternativ lässt sich der Bolzen 1 im Kupplungsgehäuse beispielsweise auch durch einen von außen in das Kupplungsgehäuse einsetzbaren Sicherungssplint sichern, der in die Nut im Bolzen 1 eingreift. Derartige geeignete Verriegelungsmechanismen sind beispielsweise in der DE 10 2012 103 404 A1 beschrieben.

## Patentansprüche

1. Kupplung zum Verbinden eines mindestens eine Deichsel aufweisenden zweispurigen Anhängers mit einem nicht motorisierten Fahrzeug oder einem lediglich einen Hilfsantrieb aufweisenden Fahrzeug, insbesondere einem Fahrrad, mit zwei zusammenwirkenden, voneinander lösbaren Kupplungsteilen, von denen das eine am Fahrzeug und das andere an der Deichsel zu befestigen ist, wobei die zusammenwirkenden Kupplungsteile einen Bolzen (1) mit mindestens einer Außenfläche und eine Bolzenaufnahme mit mindestens einer Innenfläche aufweisen, wobei die mindestens eine Außenfläche und die mindestens eine Innenfläche derart ausgebildet sind und zusammenwirken können, dass Bolzen (1) und Bolzenaufnahme relativ zueinander um ihre eigene Achse im Wesentlichen nicht drehbar sind, **dadurch gekennzeichnet, dass** die Anzahl n_{B} der Außenflächen des Bolzens (1) ungleich der Anzahl n_{H} der Innenflächen der Bolzenaufnahme ist und die mindestens zwei Außen- bzw. Innenflächen derart angeordnet sind, dass der Bolzen (1) und die Bolzenaufnahme relativ zueinander mindestens in zwei Positionen drehfest zueinander positioniert werden können, die in Umfangsrichtung des Bolzens (1) in einem Winkel von höchstens 60° zueinander stehen.

2. Kupplung nach Anspruch 1, **dadurch gekennzeichnet, dass** die Bolzenaufnahme relativ zum Bolzen (1) in mehr als sechs Positionen, in denen die Innenfläche(n) der Bolzenaufnahme und die Außenfläche(n) des Bolzens (1) zusammenwirken, auf dem Bolzen (1) positioniert werden kann.

3. Kupplung nach Anspruch 1 oder 2, **dadurch gekennzeichnet, dass** die Anzahl der Innen- bzw. Außenflächen eines Kupplungsteils n_{B oder} n_{H} ein ganzzahliges Vielfaches der Anzahl der Innen- bzw. Außenflächen des anderen Kupplungsteils n_{H oder} n_{B} ist.

4. Kupplung nach einem der vorstehenden Ansprüche, **dadurch gekennzeichnet, dass** der äußere Querschnitt des Bolzens (1) zumindest abschnittsweise ein regelmäßiges Sechseck ist.

5. Kupplung nach einem der vorstehenden Ansprüche, **dadurch gekennzeichnet, dass** der innere Querschnitt der Bolzenaufnahme zumindest abschnittsweise ein Zwölfstern ist.

6. Kupplung nach einem der vorstehenden Ansprüche, **dadurch gekennzeichnet, dass** der Bolzen (1) an einem seiner Stirnenden ein Gewinde, insbesondere ein Innengewinde (7), aufweist.

7. Kupplung nach einem der vorstehenden Ansprüche, **dadurch gekennzeichnet, dass** die Kupplungsteile Verriegelungsmittel aufweisen, mit denen die Kupplungsteile sicher miteinander verbunden werden können.

8. Kupplung nach einem der vorstehenden Ansprüche, **dadurch gekennzeichnet, dass** der Bolzen (1) einen zylindrischen Abschnitt (6) und die Bolzenaufnahme einen hohlzylindrischen Abschnitt (9) aufweisen, so dass der zylindrische Abschnitt (6) des Bolzens (1) in den hohlzylindrischen Abschnitt (9) der Bolzenaufnahme eingesetzt werden kann und der Bolzen darin radial abgestützt ist.

9. Kupplung nach einem der vorstehenden Ansprüche, **dadurch gekennzeichnet, dass** der Bolzen (6) ein zylindrisches Bauteil mit einem Sechskantkopf (5) ist, und dass die Bolzenaufnahme eine zylindrische Hülse (2) mit einem an einer ihrer Stirnseiten ausgebildeten Kragen (11) ist, wobei der Kragen (11) einen mehreckigen inneren Querschnitt aufweist, und wobei die Hülse (2) verdrehsicher in einem Kupplungsgehäuse sitzt.

10. Kupplung nach einem der vorstehenden Ansprüche, **dadurch gekennzeichnet, dass** deichselseitig mindestens ein weiteres Gelenk vorgesehen ist, durch das die Kupplung mindestens zwei Freiheitsgerade erhält, wobei das weitere Gelenk vorzugsweise ein Elastomergelenk ist.

11. Fahrzeuganhänger mit Deichsel, die eine Kupplung gemäß einem der vorstehenden Ansprüche zur Verbindung der Deichsel mit einem Fahrzeug aufweist.

## Claims

1. A coupling for connecting a two-track trailer having at least one drawbar to a non-motorized vehicle or a vehicle having only an auxiliary drive, in particular a bicycle, with two cooperating coupling parts which can be detached from each other, one of which is to be attached to the vehicle and the other to the drawbar, wherein the cooperating coupling parts comprise a bolt (1) with at least one outer surface and a bolt receptacle with at least one inner surface, wherein the at least one outer surface and the at least one inner surface are formed and can cooperate with each other in such a way that the bolt (1) and the bolt receptacle are substantially non-rotatable relative to each other about their own axis, **characterized in that** the number n_{B} of the outer surfaces of the bolt (1) is unequal to the number n_{H} of the inner surfaces of the bolt receptacle and the at least two outer or inner surfaces are arranged in such a way that the bolt (1) and the bolt receptacle can be positioned relative to each other in at least two positions which are rotationally fixed relative to one another and which are at an angle of at most 60° to one another in the circumferential direction of the bolt (1).

2. A coupling according to claim 1, **characterised in that** the bolt receptacle can be positioned on the bolt (1) in more than six positions relative to the bolt (1) in which the inner surface(s) of the bolt receptacle and the outer surface(s) of the bolt (1) cooperate.

3. A coupling according to claim 1 or 2, **characterized in that** the number of inner or outer surfaces of one coupling part n_{B} or n_{H} is an integer multiple of the number of inner or outer surfaces of the other coupling part n_{H} or n_{B}.

4. A coupling according to one of the above claims, **characterised in that** the outer cross-section of the bolt (1) is, at least in sections, a regular hexagon.

5. A coupling according to one of the above claims, **characterised in that** the inner cross-section of the bolt receptacle is, at least in sections, a twelve-pointed star.

6. A coupling according to one of the above claims, **characterized in that** the bolt (1) has a thread, in particular an internal thread (7), on one of its end faces.

7. A coupling according to any of the above claims, **characterized in that** the coupling parts have locking means by which the coupling parts can be securely connected to each other.

8. A coupling according to one of the above claims, **characterized in that** the bolt (1) has a cylindrical portion (6) and the bolt receptacle has a hollow cylindrical portion (9), so that the cylindrical portion (6) of the bolt (1) can be inserted into the hollow cylindrical portion (9) of the bolt receptacle and the bolt is radially supported therein.

9. A coupling according to one of the above claims, **characterized in that** the bolt (6) is a cylindrical component with a hexagonal head (5), and **in that** the bolt receptacle is a cylindrical sleeve (2) with a collar (11) formed on one of its end faces, the collar (11) having a polygonal inner cross-section, and the sleeve (2) being seated non-rotatably in a coupling housing (3).

10. A coupling according to one of the above claims, **characterized in that** at least one further joint is provided on the drawbar side, by means of which the coupling is given at least two lines of freedom, the further joint preferably being an elastomer joint.

11. A vehicle trailer with a drawbar having a coupling according to one of the above claims for connecting the drawbar to a vehicle.

## Revendications

1. Attelage pour raccorder une remorque à deux voies présentant au moins un timon à un véhicule non motorisé ou un véhicule présentant uniquement un entraînement auxiliaire, en particulier une bicyclette, avec deux parties d'attelage en coopération, pouvant être détachées l'une de l'autre, dont l'une est à fixer sur le véhicule et l'autre sur le timon, dans lequel les parties d'attelage en coopération présentent un axe (1) avec au moins une surface extérieure et un logement d'axe avec au moins une surface intérieure, dans lequel la au moins une surface extérieure et la au moins une surface intérieure sont réalisées et peuvent coopérer de telle sorte que l'axe (1) et le logement d'axe ne peuvent sensiblement pas être amenés en rotation l'un par rapport à l'autre autour de leur axe propre, **caractérisé en ce que** le nombre n_{H} des surfaces extérieures de l'axe (1) est différent du nombre n_{H} des surfaces intérieures du logement d'axe et les au moins deux surfaces extérieures ou intérieures sont disposées de telle sorte que l'axe (1) et le logement d'axe peuvent être positionnés l'un par rapport à l'autre au moins dans deux positions de manière solidaire en rotation l'un par rapport à l'autre, qui se trouvent selon un angle de maximum 60° l'une par rapport à l'autre dans la direction périphérique de l'axe (1).

2. Attelage selon la revendication 1, **caractérisé en ce que** le logement d'axe peut être positionné par rapport à l'axe (1) dans plus de six positions, dans lesquelles la(les) surface(s) intérieure(s) du logement d'axe et la(les) surface(s) extérieure(s) de l'axe (1) coopèrent, sur l'axe (1).

3. Attelage selon la revendication 1 ou 2, **caractérisé en ce que** le nombre des surface intérieures ou extérieures d'une partie d'attelage n_{B} ou n_{H} est un multiple entier du nombre des surfaces intérieures ou extérieures de l'autre partie d'attelage n_{H} ou n_{B}.

4. Attelage selon l'une quelconque des revendications précédentes, **caractérisé en ce que** la section transversale extérieure de l'axe (1) est au moins en partie un hexagone régulier.

5. Attelage selon l'une quelconque des revendications précédentes, **caractérisé en ce que** la section transversale intérieure du logement d'axe est au moins en partie une étoile à douze branches.

6. Attelage selon l'une quelconque des revendications précédentes, **caractérisé en ce que** l'axe (1) présente sur une de ses extrémités frontale un filetage, en particulier un filetage femelle (7).

7. Attelage selon l'une quelconque des revendications précédentes, **caractérisé en ce que** les parties d'attelage présentent des moyens de verrouillage, avec lesquels les parties d'attelage peuvent être reliées l'une à l'autre de manière sûre.

8. Attelage selon l'une quelconque des revendications précédentes, **caractérisé en ce que** l'axe (1) présente une section cylindrique (6) et le logement d'axe une section cylindrique creuse (9), de sorte que la section cylindrique (6) de l'axe (1) peut être insérée dans la section cylindrique creuse (9) du logement d'axe et le boulon est radialement en appui dans celui-ci.

9. Attelage selon l'une quelconque des revendications précédentes, **caractérisé en ce que** l'axe (6) est un élément cylindrique avec une tête hexagonale (5), et que le logement d'axe est un manchon cylindrique (2) avec une collerette (11) réalisée sur une de ses faces frontales, dans lequel la collerette (11) présente une section transversale intérieure polygonale, et dans lequel le manchon (2) repose sans possibilité de rotation dans un boîtier d'attelage.

10. Attelage selon l'une quelconque des revendications précédentes, **caractérisé en ce que**, côté timon, au moins une autre articulation est prévue, par laquelle l'attelage reçoit au moins deux degrés de liberté, dans lequel l'autre articulation est de préférence une articulation élastomère.

11. Remorque de véhicule avec timon, qui présente un attelage selon l'une quelconque des revendications précédentes pour relier le timon à un véhicule.
